(19) Europäisches Patentamt
European Patent Office
Office européen des brevets

(11) **EP 3 789 759 B1**

(12) **FASCICULE DE BREVET EUROPEEN**

(45) Date de publication et mention de la délivrance du brevet:
**23.08.2023 Bulletin 2023/34**

(21) Numéro de dépôt: **19306082.9**

(22) Date de dépôt: **09.09.2019**

(51) Classification Internationale des Brevets (IPC):
**G01N 21/95** (2006.01)   **G01R 31/302** (2006.01)
**H02S 50/00** (2014.01)

(52) Classification Coopérative des Brevets (CPC):
**G01N 21/9505; H02S 50/00;** Y02E 10/50

(54) **CARTOGRAPHIE D'IMPURETÉS PAR ÉLECTROLUMINESCENCE DANS DES DISPOSITIFS À MATÉRIAUX SEMI-CONDUCTEURS**

ELEKTROLUMINESZENZ-KARTIERUNG VON VERUNREINIGUNGEN IN VORRICHTUNGEN MIT HALBLEITERMATERIALIEN

MAPPING OF IMPURITIES BY ELECTROLUMINESCENCE IN DEVICES WITH SEMICONDUCTOR MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**10.03.2021 Bulletin 2021/10**

(73) Titulaires:
• **Electricité de France**
  **75008 Paris (FR)**
• **CENTRE NATIONAL DE LA RECHERCHE SCIENTIFIQUE -CNRS-**
  **75016 Paris (FR)**

(72) Inventeurs:
• ORY, Daniel
  **92260 Fontanay aux Roses (FR)**
• PAUL, Nicolas
  **93100 Montreuil (FR)**
• LOMBEZ, Laurent
  **92000 Nanterre (FR)**

(74) Mandataire: **Plasseraud IP**
  **66, rue de la Chaussée d'Antin**
  **75440 Paris Cedex 09 (FR)**

(56) Documents cités:
**EP-A1- 2 343 534     EP-A1- 2 378 278**
**JP-A- 2007 318 029     US-A1- 2010 237 895**
**US-A1- 2012 113 415**

**Description**

La présente divulgation concerne l'obtention de cartographie de mesure d'impuretés, notamment dans des dispositifs à matériaux semi-conducteurs, par interaction lumière/matière. On connaît des solutions d'obtention de telles cartographies par excitation laser. L'étude du spectre de photoluminescence résultant de cette excitation laser à une longueur d'onde inférieure au gap du matériau semi-conducteur peut permettre de détecter des niveaux d'énergie caractérisant certaines impuretés. Toutefois, une telle technique ne donne pas autant d'informations que souhaité.

On peut avoir recours alors à une technique d'excitation électrique du matériau (par application d'une tension entre deux bornes reliées au matériau étudié) et observer une lumière émise par phénomène d'électroluminescence comme décrit par exemple dans le document JP2007318029. Toutefois ce document n'exploite pas la variation d'électroluminescence qui peut être observée en réaction à une variation de la tension qui est appliquée. Il est en effet difficile de quantifier une intensité attendue de lumière émise par électroluminescence en fonction de la tension appliquée. Les documents D1 : US 2012/0113415 et D2 : EP 2 343 534 divulguent des relations entre l'intensité mesurée de lumière émise par électroluminescence et la tension ou le courant appliqué.

La présente divulgation vient améliorer cette situation.

Elle propose à cet effet d'assimiler l'intensité de lumière émise par électroluminescence à une quantité simplement proportionnelle (ou au moins corrélée) au courant électrique généré par l'application de la tension. En effet, le matériau semi-conducteur correspond à un dipôle électrique connu et la variation du courant électrique en fonction de la tension appliquée peut suivre des modèles connus, qui peuvent dépendre d'ailleurs de paramètres caractérisant la présence de défauts dans le matériau. Ainsi, l'application directe d'un tel modèle aux intensités lumineuses mesurées (obtenues par électroluminescence) permet :

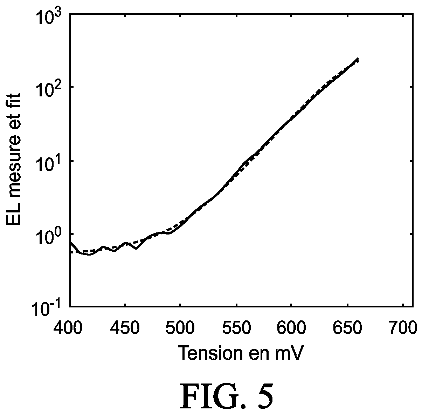

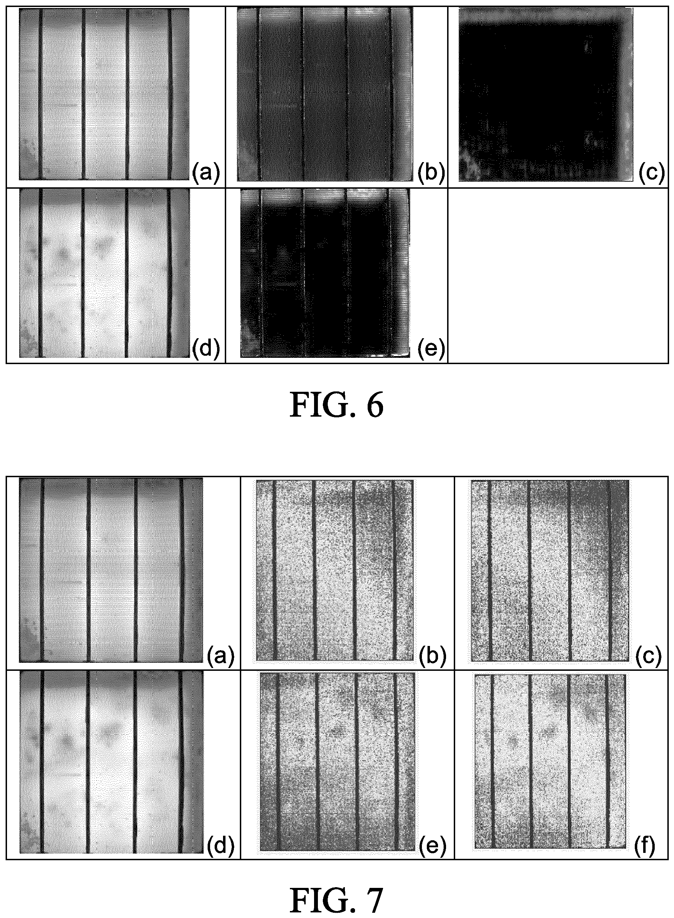

- d'une part, de vérifier le bon respect du modèle de variation en fonction de la tension (comme on le voit sur la figure 5 commentée en détails plus loin), et
- d'autre part, d'identifier des variations de valeurs de paramètres caractérisant la présence de défauts, ces variations apparaissant dans des zones du matériau semi-conducteur par rapport à d'autres zones (comme on le verra plus loin en référence aux figures 6 (b) (c) (e) et 7 (b) (c) (e) (f)).

Ainsi, une telle réalisation permet d'obtenir directement une cartographie de défauts dans le matériau du fait des variations spatiales de ces paramètres. Par ailleurs, il a été observé que le modèle, qui peut dépendre de plusieurs types de paramètres, peut donner accès à des cartographies d'autant de types de défauts, respectivement (figures 6 (b) (c) (e), d'une part, et figures 7 (b) (c) (e) (f), d'autre part, respectivement).

Selon l'invention, telle que définit dans la revendication 1, l'objet de la présente divulgation vise un procédé de détermination de répartition spatiale de défauts dans un échantillon à matériau semi-conducteur et connecté électriquement à deux bornes au moins, le procédé comportant :

- appliquer une tension entre les deux bornes,
- acquérir par une caméra une image d'une lumière émise par électroluminescence par l'échantillon,
- répéter l'acquisition d'images en faisant varier la tension entre les deux bornes,
- mesurer une intensité lumineuse émise par électroluminescence dans des zones (de type « pixels » ou groupes de pixels) des images acquises en fonction de ladite tension appliquée entre les deux bornes.

Selon l'invention, ce procédé comporte en outre :

- déterminer un modèle de variation d'intensité lumineuse émise par électroluminescence en fonction de ladite tension appliquée, par assimilation à la variation d'un courant généré dans l'échantillon en fonction de la tension appliquée, ledit modèle utilisant au moins un paramètre caractérisant une présence de défauts dans le matériau,
- appliquer le modèle aux mesures d'intensité lumineuse et identifier des zones de l'échantillon dans lesquelles le paramètre varie (pour continuer à vérifier le modèle), et
- déduire des variations (spatiales) du paramètre une cartographie de défauts dans l'échantillon.

On entend de façon générale par le terme « défauts » des impuretés perturbant une migration des porteurs (électrons ou trous) pendant l'application de la tension, cette perturbation pouvant aller jusqu'à une annihilation. Le paramètre précité caractérisant la présence de défaut est alors représentatif d'une résistance parasite dans l'échantillon. En particulier, il peut s'agir, comme on le verra plus loin, d'une résistance série, notée Rs* ci-après, incluant notamment une résistance typique en cas de défauts, dite « résistance de couche ».

Ces impuretés piégeant les porteurs peuvent comporter au moins un métal (par exemple du fer). Il a été observé en effet que le présent procédé peut être avantageusement appliqué avec efficacité à la détection de défauts liés à la présence de fer et à leur cartographie. Ce type de défaut s'observe notamment dans des matériaux semi-conducteurs à base de silicium élaborés par certaines techniques. D'autres techniques peuvent générer en grande quantité des impuretés d'oxygène et/ou d'azote, qui peuvent aussi être détectées par électroluminescence selon le procédé au sens de la présente divulgation.

Ces défauts sont très pénalisants dans le cas d'un échantillon appliqué en tant que cellule solaire (de panneau photovoltaïque par exemple), et le procédé peut ainsi être appliqué à une cellule solaire en tant qu'échantillon d'analyse.

Cette cellule solaire peut être à simple jonction comme on le verra dans des exemples de réalisation ci-après, ou encore multi-jonction sans perte de généralité.

Selon l'invention le modèle précité est donné par une équation du type :

$$EL(V,x,y) = I_0^*(x,y) \, . \, \exp\left(\frac{V - R_S^*(x,y) \, . \, EL(V,x,y)}{n(x,y) \, . \, kT}\right)$$

où :

$EL(V,x,y)$ est l'intensité lumineuse émise par électroluminescence mesurée en un point de coordonnées $x$ et $y$ d'une image acquise avec une application de tension V entre les deux bornes, k est la constante de Boltzmann,
T est une température ambiante,
q est la charge d'un électron,
$I_0^*(x,y)$ est une constante relativement à V, représentative d'un courant dans l'obscurité de l'échantillon aux coordonnées $x, y$,
$n(x, y)$ est un facteur d'idéalité, et
$R_S^*(x,y)$ est une grandeur représentative d'une résistance série parasite dans le matériau de l'échantillon, et correspond audit paramètre caractérisant une présence de défauts dans le matériau.

On identifie alors des zones de l'échantillon dans lesquelles le paramètre de résistance série $R_S^*(x,y)$ augmente, caractérisant ainsi des zones de l'échantillon dans lesquelles des défauts sont présents.

Toutefois, l'avantage d'un tel modèle est qu'il permet d'exploiter en outre au moins un deuxième paramètre parmi la constante $I_0^*(x,y)$ et le facteur d'idéalité $n(x, y)$ pour :

- comparer le modèle aux images acquises et identifier des zones de l'échantillon dans lesquelles ledit deuxième paramètre varie, et
- obtenir ainsi une deuxième cartographie de défauts dans l'échantillon.

Avantageusement, la variation du deuxième paramètre par zones d'échantillon révèle des défauts différents de ceux révélés par la variation de la résistance série $R_S^*(x,y)$. Il a été observé en effet très peu de corrélation entre le premier paramètre $R_S^*(x,y)$ et ce deuxième paramètre.

Il peut être montré (comme présenté en détails plus loin) que ce deuxième paramètre est fonction d'une énergie d'activation Ea de défauts dans le matériau, et une détermination de cette énergie d'activation Ea caractérise un type de défaut présent dans le matériau.

On peut tenir compte en outre d'une résistance de fuite $R_{sh}^*(x,y)$, et le modèle précité devient :

$$EL(V,x,y) = I_0^*(x,y) \, . \, e^{\left(\frac{V - R_S^*(x,y) \, . \, EL(V,x,y)}{n(x,y) \, . \, kT}\right)} + \frac{V - R_S^*(x,y) \, . \, EL(V,x,y)}{R_{sh}^*(x,y)}$$

Ainsi, on peut exploiter en outre une variation de la résistance de fuite $R_{sh}^*(x,y)$ par zones d'image, en tant que troisième paramètre, pour identifier des défauts dans le matériau.

Il est alors possible de distinguer différents types de défauts, dont notamment des dislocations dans le matériau semi-conducteur (lorsque celui-ci est typiquement cristallin (au moins en partie)).

La présente invention comprend aussi une installation, telle que définit dans la revendication 13, pour la mise en oeuvre du procédé ci-avant, et comportant à cet effet au moins un support d'échantillon comportant deux bornes et conformé pour connecter l'échantillon aux deux bornes, un voltmètre pour appliquer une tension choisie entre les deux bornes, et une caméra pour acquérir les images successivement en fonction de la tension appliquée entre les deux bornes. L'installation comporte en outre un circuit de traitement relié à la caméra pour acquérir des données d'intensité lumineuse par zones d'image acquises par la caméra, appliquer ce modèle aux intensités lumineuses par zones d'images acquises et identifier des zones de l'échantillon dans lesquelles le paramètre précité (caractérisant la présence de défaut) varie, pour obtenir une cartographie des défauts dans l'échantillon.

Le voltmètre précité peut être un sourcemètre en particulier, ce qui permet de mesurer en outre (et d'enregistrer) le courant correspondant circulant dans l'échantillon. Une telle réalisation peut permettre d'avoir une valeur de référence du courant, et permettre un étalonnage typiquement.

La présente invention comprend aussi un programme, tel que définit dans la revendication 14, comportant des instructions pour la mise en oeuvre du procédé ci-avant (en particulier le traitement numérique des données d'images afin d'appliquer ledit modèle aux intensités lumineuses par zones d'images acquises et identifier des zones de l'échantillon dans lesquelles ledit paramètre varie, et obtenir une cartographie des défauts dans l'échantillon), lorsque ces instructions sont exécutées par un processeur d'un circuit de traitement.

Ainsi, le traitement numérique des images acquises permet de vérifier que des régions de l'échantillon respectent bien un modèle d'évolution de l'électroluminescence émise en fonction de la tension appliquée V. Une première originalité de la présente divulgation est que ce modèle assimile l'intensité lumineuse émise par electroluminescence à un courant généré dans le matériau par application de la tension V, comme suit, selon un modèle grossier (ne tenant pas compte de la résistance shunt) :

$$EL(V, x, y) = I_0^*(x, y) \cdot \exp\left(\frac{V - R_S^*(x,y) \cdot EL(V,x,y)}{n(x,y) \cdot kT}\right)$$

Ce modèle dépend notamment du paramètre $Rs^*(x,y)$ représentatif d'une résistance caractérisant la présence de défauts dans le matériau. Son augmentation dans certaines régions des images caractérise alors la présence de défauts dans des régions correspondantes de l'échantillon. D'autres paramètres tels que $n(x, y)$ et $I_0^*(x, y)$ (qui apparaissent corrélés entre eux mais pas avec le paramètre précédent Rs*) peuvent donner encore d'autres informations sur la nature des défauts présents.

On peut obtenir alors une cartographie des défauts dans l'échantillon, avec une caractérisation possible de leur nature (dislocation, impuretés, ou autres).

La technique simple d'analyse de l'électroluminescence pour en déduire la présence de défauts (sans faire varier la tension) est certes connue. Toutefois, dans la présente divulgation, l'élaboration d'un modèle de variation du niveau d'électroluminescence en fonction de la tension appliquée permet de déduire une variation d'un paramètre du modèle (tel que Rs*), par zones de l'échantillon dans lesquelles des défauts sont alors présents.

D'autres avantages et caractéristiques de la présente divulgation apparaitront à la lecture d'exemples de réalisation détaillés ci-après et à l'examen des dessins annexés, sur lesquels :

- La figure 1 illustre des éléments d'une installation possible pour la mise en oeuvre du procédé ci-avant,
- La figure 2 illustre des étapes d'un tel procédé à titre d'exemple,
- La figure 3 illustre une image d'électroluminescence d'un échantillon (type cellule solaire simple jonction) obtenue par application d'une tension, fixe ici, entre ses bornes,
- La figure 4 représente la variation de l'intensité lumineuse émise par électroluminescence en fonction de la tension appliquée aux bornes de l'échantillon de la figure 3,
- La figure 5 compare la variation de l'intensité d'électroluminescence en fonction de la tension, calculée à partir du modèle précité (courbe régulière), aux données expérimentales obtenues (courbe accidentée),
- La figure 6 illustre l'image d'électroluminescence d'un premier échantillon (cumul des images d'électroluminescence pour plusieurs tensions appliquées) en (a) et d'un deuxième échantillon en (d), la cartographie du paramètre Rs* du premier échantillon en (b) et du deuxième échantillon en (e), et le taux de fer présent dans le premier échantillon (déterminé par une autre technique) en (c),
- La figure 7 illustre à nouveau pour comparaison l'image d'électroluminescence du premier échantillon en (a) et du deuxième échantillon en (d), la cartographie du paramètre n(x,y) du premier échantillon en (b) et du deuxième échantillon en (e), ainsi que la cartographie du paramètre $I_0^*(x,y)$ du premier échantillon en (c) et du deuxième échantillon en (f),

- La figure 8 illustre la corrélation en (b) entre les deux paramètres Io*(x,y) et n(x,y) (son inverse plus précisément) pour l'échantillon dont l'électroluminescence est illustrée en (a), et
- La figure 9 compare les corrélations existantes entre le premier paramètre Rs* et l'intensité de lumière émise par electroluminescence, en présence de dislocations dans le matériau de l'échantillon (a) et en absence de dislocations (b).

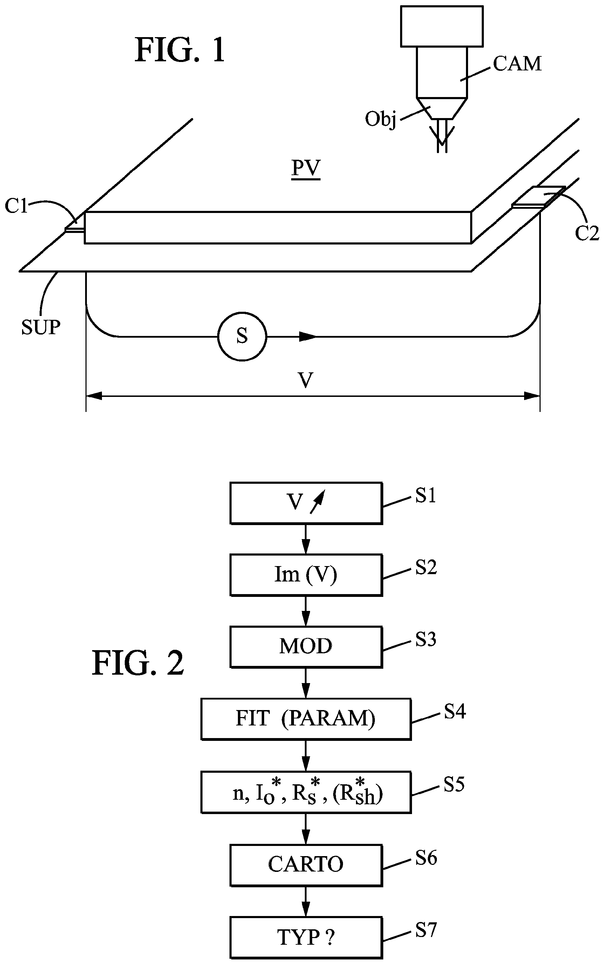

On se réfère à la figure 1 pour décrire une installation au sens de la présente divulgation, pour la mise en oeuvre d'électroluminescence variée en tension (ou ELV ci-après). L'interprétation des mesures d'électroluminescence permet ensuite de déterminer, à partir des paramètres extraits par analyse, des caractéristiques et propriétés physico-chimiques de l'échantillon étudié (par exemple un dispositif à matériau semi-conducteur).

Les échantillons étudiés doivent pouvoir être connectés à une source de tension-courant. Il peut s'agir par exemple et avantageusement de cellules (panneaux) solaires.

L'installation comporte :

- un support d'échantillon SUP comprenant les contacts C1, C2 (par exemple des pistes métalliques) afin d'établir une tension V aux bornes de l'échantillon (référencé PV),
- Une source S de courant-tension (ou « sourcemètre »), branchée aux bornes C1, C2 du support,
- Une caméra CAM (par exemple à capteur silicium), qui peut être grand angle pour obtenir une image globale d'électroluminescence de l'échantillon ou qui est reliée à une plateforme mobile en translation par exemple dans un plan parallèle à surface de l'échantillon PV pour acquérir successivement des images en vue d'une reconstitution ultérieure d'une image unique, et éventuellement
- Un objectif Obj fixé à la caméra.

L'ensemble est installé de manière à effectuer les mesures dans le noir (sans source d'éclairage et sans risque d'émission de photoluminescence par l'échantillon). L'échantillon PV est installé sur le support SUP et la caméra CAM enregistre les images d'électroluminescence, à raison d'au moins une image par niveau de tension sélectionné.

Bien entendu, le capteur peut être à base d'un matériau différent du silicium, comme InGaAs ou encore HgCdTe ou autre. La conséquence est que la bande spectrale enregistrée est différente, et donc les résultats issus du traitement de données sont différents et interprétables différemment. Il se peut que la bande spectrale observée soit celle des caméras dites « thermiques ».

On peut prévoir en outre un filtre entre l'échantillon et la caméra. Avec un effet similaire à l'utilisation de différents capteurs, il est envisageable de modifier l'intensité du signal enregistré en interposant un filtre avant le capteur (le plus souvent sur l'objectif). Là encore, le choix du filtre peut avoir des conséquences sur les résultats et leurs interprétations.

Typiquement, on peut prévoir dans le procédé l'apposition d'un filtre optique (passe-bande, passe-haut ou passe-bas) devant la caméra pour recueillir une lumière émise par électroluminescence seulement dans au moins une bande de longueurs d'onde optiques choisies (par exemple caractéristiques de certains défauts). Ainsi, l'électroluminescence issue du matériau lui-même (sans défaut) est filtrée et ne parvient pas à la caméra et ce afin de ne pas bruiter les données d'image de ces défauts.

Il est possible en outre de réaliser les mesures en faisant varier la température.

Il est possible de mesurer des échantillons par exemple de type cellules uniques simple jonction, ou bien des cellules multi-jonctions, ou bien des assemblages (module photovoltaïque), ou autres. Les matériaux constituant ces cellules peuvent avoir un gap différent, ce qui implique des plages de tension différentes. L'assemblage soit en module, soit en multi-jonction, modifie également la plage de tension à étudier.

Dans l'exemple décrit ci-après, l'échantillon étudié est une cellule solaire silicium simple jonction.

En référence maintenant à la figure 2, à l'étape S1, on fait varier la tension entre une borne basse (par exemple 400mV) et une borne haute (par exemple 700mV). Ces bornes dépendent de la technologie de la cellule, principalement de son gap optique et de l'architecture du dispositif. L'accroissement de tension entre deux images doit être choisi suffisamment petit pour permettre un nombre d'images permettant un traitement mathématique satisfaisant, et suffisamment grand pour explorer la plage de tension sans accroître inutilement le volume de données et le temps de calcul. Par exemple, le pas peut généralement être de 10mV, voire 5 mV.

Le jeu de données issu de la mesure et obtenu à l'étape S2 consiste donc en un empilage (un cube) d'images bidimensionnelles (en x,y) de niveaux de gris correspondant à une tension croissante (en z).

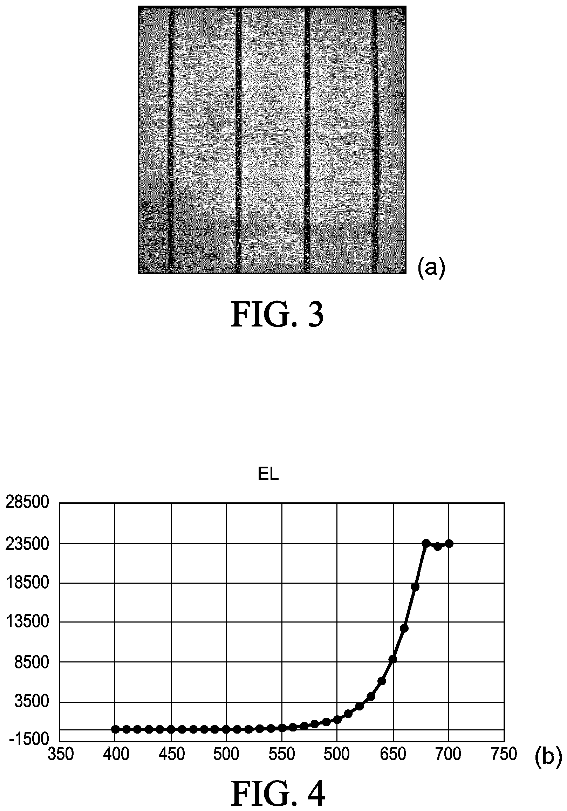

On s'aperçoit que, pour un pixel donné, la courbe d'électroluminescence présente un caractère exponentiel en fonction de la tension. La figure 3 est une image en niveau de gris d'électroluminescence à une tension appliquée de 670mV et la figure 4 est la courbe d'électroluminescence en fonction de la tension pour un pixel particulier. Le plafonnement de la courbe après 680 mV est dû expérimentalement ici à une limitation en courant du sourcemètre.

En référence à nouveau à la figure 2, l'étape suivante S3 consiste à trouver un modèle s'adaptant à ce type de courbe (figure 4) et à en expliquer les résultats.

Le comportement électrique des cellules solaires (simple jonction) idéales est décrit par une équation donnant le courant *I* en fonction de la tension appliquée V :

$$I(V) = I_0 \cdot \left( e^{\frac{qV}{kT}} - 1 \right)$$

Avec $I_0$ : le courant dans l'obscurité de la jonction
k : la constante de Boltzmann
T : la température
q : la charge de l'électron
V : la tension aux bornes de la jonction
I : le courant aux bornes de la jonction.

La cellule solaire réelle non idéale se décrit par un modèle où s'ajoutent au moins trois paramètres :

n, un facteur d'idéalité
Rs, une résistance série
Rsh, une résistance shunt (de fuite).

De sorte que l'équation précédente devient :

$$I(V) = I_0 \cdot e^{\left( \frac{V - R_s \cdot I(V)}{n \cdot kT} \right)} + \frac{V - R_s \cdot I(V)}{R_{sh}}$$

A l'étape S3, le modèle MOD de variation d'électroluminescence en fonction de la tension appliquée est alors défini comme suit.

L'électroluminescence est la luminescence d'un matériau semi-conducteur hors équilibre, activé électriquement. La luminescence est la traduction optique de la quantité présente de porteurs de charge (électrons et trous). Ces porteurs étant apportés électriquement, ils sont équivalents au courant présent.

L'étape S3 revient alors à assimiler l'intensité d'électroluminescence en chaque point (x,y) de l'échantillon à un courant I(V) de sorte que le modèle MOD peut être construit sous la forme suivante :

$$EL(V,x,y) = I_0^*(x,y) \cdot \exp\left( \frac{V - R_S^*(x,y) \cdot EL(V,x,y)}{n(x,y) \cdot kT} \right)$$

ou encore comme suit, si l'on souhaite tenir compte de la résistance de shunt Rsh (ce qui peut ne pas être systématique comme démontré plus loin) :

$$EL(V,x,y) = I_0^*(x,y) \cdot e^{\left( \frac{V - R_S^*(x,y) \cdot EL(V,x,y)}{n(x,y) \cdot kT} \right)} + \frac{V - R_S^*(x,y) \cdot EL(V,x,y)}{R_{sh}^*(x,y)}$$

Les paramètres $I_0$, Rs et Rsh deviennent dans ces équations $I_0^*$, Rs* et Rsh* car ils ne correspondent plus à des grandeurs électriques au sens strict.

Le traitement mathématique de l'étape suivante S4 consiste alors à identifier le jeu de paramètres PARAM : $n$ , $I_0^*$, $R_s^*$ et $R_{sh}^*$ qui minimise l'erreur d'ajustement entre la courbe théorique $EL_{th}(V,x,y)$ et la courbe réellement mesurée ELmes(V,x,y).

A titre d'exemple, on peut chercher à minimiser par une méthode des moindres carrés la différence ((*ELth*)) -(*Ln(ELmes-Dark)*), R étant la partie réelle de la quantité entre parenthèses et Dark une image prise dans les mêmes conditions en l'absence de toute tension.

La figure 5 est un « fit » de variations, montrant un exemple de courbe EL(V) mesurée (présentant des oscillations liées à du bruit essentiellement dans les basses tensions et donc à faible EL), à comparer avec la courbe théorique associée.

Les équations données ci-dessus peuvent dans des variantes être simplifiées. Par exemple, selon les cas, il est possible de ne pas considérer la résistance de shunt Rsh* (si cela n'améliore pas la qualité de l'ajustement des données). Il est également possible de ne pas soustraire d'image de noir complet *Dark* (cette soustraction apportant néanmoins un étalonnement pour plus de précision).

A l'étape S4, la comparaison de la courbe théorique à la courbe expérimentale permet d'obtenir à l'étape S5 les paramètres PARAM les plus proches de la variation expérimentale. On peut en déduire à l'étape S6, comme on le verra plus loin, une cartographie au moins de $R_s^*$, $n$, et $I_0^*$. Certains au moins de ces paramètres, notamment $R_s^*$, sont corrélés à la présence de défaut et notamment d'impuretés (du fer dans l'exemple présenté ci-après) altérant la circulation des porteurs dans l'échantillon observé.

L'analyse de la répartition spatiale du paramètre $R_s^*$ par obtention de sa cartographie montre que son intensité apparait corrélée au taux de fer local (que celui-ci soit ou non situé dans un réseau de dislocations). Ceci permet de manière simple d'identifier sur un échantillon tel qu'une cellule finie cette grandeur de concentration de fer, qui est généralement très pénalisante pour le rendement des cellules photovoltaïques.

La corrélation entre les images (b) et (c) de la figure 6 est en effet satisfaisante, autant pour les zones avec forte présence de fer sans dislocations (bandes latérales supérieure et droite) que pour la zone avec dislocations (coin inférieur gauche).

Quant aux autres paramètres, il s'avère que Rsh* n'est pas un paramètre réellement significatif, sa variation spatiale étant très faible.

Par ailleurs, il apparait que les paramètres $n$ et $I_0^*$ semblent étroitement corrélés, sans toutefois être spatialement corrélés à Rs* dans les cartographies. En effet, la figure 7 ne montre aucun lien entre les cartographies de Rs* (figure 6 (b) et (e)) et les cartographies de $n$ et $I_0^*$ (figure 7, respectivement (b)-(e) et (c)-(f)). Il est possible que ces paramètres $n$ et $I_0^*$ soient reliés au taux de fer présent sous une autre forme, ou bien à une autre impureté, ou bien à une impureté localisée en surface et non pas dans la masse de la cellule.

Il apparait de façon intéressante également que les paramètres $I_0^*$ et $n$ traduisent des variations spatiales de défauts qui ne sont pas facilement décelables par simple cartographie d'électroluminescence (en particulier dans la ligne (a) (b) (c) de la figure 7). On relève toutefois une répartition spatiale assez proche dans la ligne inférieure (d) (e) (f) de la figure 7 entre l'électroluminescence d'une part, et $I_0^*$ et $n$ d'autre part, ce qui montre bien néanmoins leur relation.

On comprendra alors que Rs* par exemple peut mettre en évidence à l'étape S7 de la figure 2 un certain type de défauts tandis que $n$ et/ou $I_0^*$ peuvent mettre en évidence au moins un autre type défaut.

Des résultats similaires ont pu être mis en évidence sur une cellule à base de CIGS, une cellule à base de GaAs et une cellule à base de GaInP.

On montre ci-après la relation existante entre $n$ et $I_0$. Dans le cas de $I_0$, il existe bien la relation classique suivante :

$$I_0 = I_{00} \cdot \exp(-\frac{E_a}{nkT})$$

avec Ea, une énergie d'activation caractéristique du défaut concerné.

Cette définition peut être étendue selon l'approche précédente à une expression de $I_0^*$ en fonction de $I_{00}^*$. Cette expression est donnée plus aisément sous forme logarithmique comme suit :

$$\ln(I_0^*) = \ln(I_{00}^*) - \frac{E_a}{kT} * \frac{1}{n}$$

En traçant des couples (Ln($I_0^*$) ; 1/n ) et déterminant une droite de régression, il est possible d'obtenir l'énergie d'activation Ea à partir de la pente, et $I_{00}^*$ (à une constante près) à partir de l'interception de la droite avec l'axe des ordonnées.

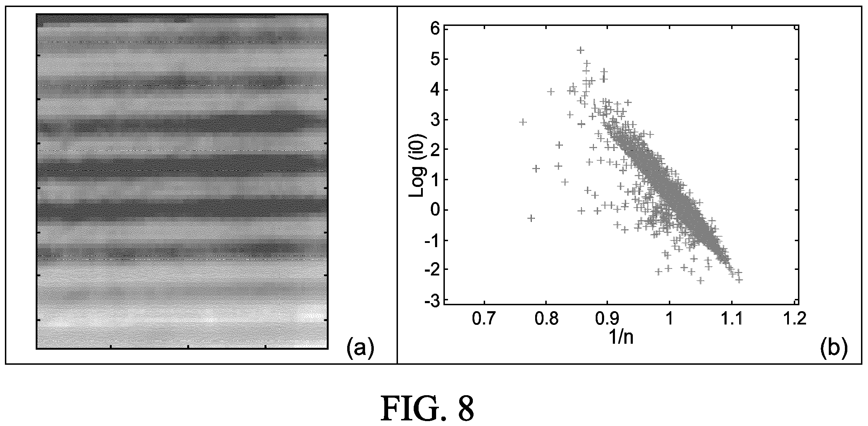

Ainsi de l'image EL de la cellule de la figure 8 (a), il est possible d'obtenir la régression de la figure 8 (b).

La relation linéaire envisagée se vérifie et il est donc possible d'accéder paramètres Ea et $I_{00}^*$. En particulier, Ea correspond à l'énergie d'activation d'un défaut spécifique dont la valeur peut encore ici caractériser le type de défaut en présence.

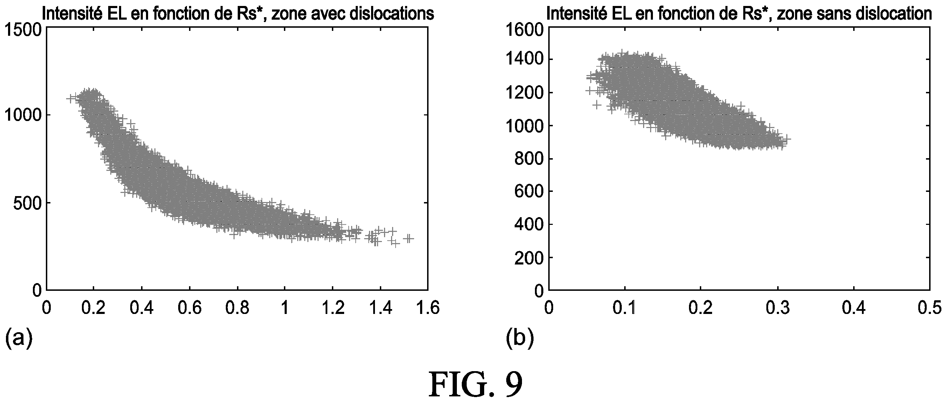

Par ailleurs, on a illustré sur les figures 9 (a) et 9 (b) les corrélations respectives entre le premier paramètre précité Rs* et le niveau d'électroluminescence émise EL :

- dans des zones d'échantillon de semi-conducteur au moins partiellement cristallin où la présence de dislocations a été vérifiée par une autre méthode (a), et
- dans des zones de l'échantillon qui sont sans dislocation (b).

Dans les zones sans dislocation, la relation entre Rs* et EL est quasi-linéaire (b), alors qu'elle est plutôt en puissance dans les zones avec dislocations (a). Ainsi, on peut caractériser spécifiquement les dislocations par cette méthode, en outre.

De manière plus générale, on peut retenir qu'en enregistrant puis en traitant les images d'électroluminescence successivement obtenues en faisant varier la tension *V,* il est possible d'accéder à des paramètres n, $I_0{}^*$, Rs*, Rsh*, Ea et $I_{00}{}^*$ caractérisant des défauts physico-chimiques du matériau, qui peuvent être de différentes natures (présence d'impuretés, de dislocations dans le cristal du matériau, et/ou autres).

## Revendications

1. Procédé de détermination de répartition spatiale de défauts dans un échantillon à matériau semi-conducteur et connecté électriquement à deux bornes au moins, le procédé comportant :

   - appliquer une tension entre les deux bornes,
   - acquérir par une caméra une image d'une lumière émise par électroluminescence par l'échantillon,
   - répéter l'acquisition d'images en faisant varier la tension entre les deux bornes,
   - mesurer une intensité lumineuse émise par électroluminescence dans des zones des images acquises en fonction de ladite tension appliquée entre les deux bornes,
   le procédé étant **caractérisé en ce qu'**il comporte en outre :

   - déterminer un modèle de variation d'intensité lumineuse émise par électroluminescence en fonction de ladite tension appliquée, par assimilation à la variation d'un courant généré dans l'échantillon en fonction de la tension appliquée, ledit modèle utilisant au moins un paramètre (Rs*) caractérisant une présence de défauts dans le matériau,
   - appliquer le modèle aux mesures d'intensité lumineuse et identifier des zones de l'échantillon dans lesquelles le paramètre (Rs*) varie, et
   - déduire des variations du paramètre (Rs*) une cartographie de défauts dans l'échantillon,

   Et **caractérisé en ce que** ledit modèle est donné par une équation du type :

$$EL(V, x, y) = I_0^*(x, y) \, . \, \exp\left(\frac{V - R_S^*(x,y) \, . \, EL(V,x,y)}{n(x,y) \, . \, kT}\right)$$

   où :

   *EL(V,x,y)* est l'intensité lumineuse émise par électroluminescence mesurée en un point de coordonnées *x* et *y* d'une image acquise avec une application de tension V entre les deux bornes,
   k est la constante de Boltzmann,
   T est une température ambiante,
   q est la charge d'un électron,
   $I_0^*(x, y)$ est une constante relativement à *V,* représentative d'un courant dans l'obscurité de l'échantillon aux coordonnées *x, y,*
   *n(x,* y) est un facteur d'idéalité, et
   $R_s^*(x, y)$ est une grandeur représentative d'une résistance série parasite dans le matériau de l'échantillon, et correspond audit paramètre caractérisant une présence de défauts dans le matériau.

2. Procédé selon la revendication 1, **caractérisé en ce que** les défauts sont des impuretés perturbant une migration de porteurs dans le matériau pendant l'application de la tension, et **en ce que** le paramètre (Rs*) est représentatif d'une résistance série parasite dans l'échantillon.

3. Procédé selon revendication 2, **caractérisé en ce que** les impuretés comportent au moins un métal.

4. Procédé selon la revendication 3, **caractérisé en ce que** le métal est du fer.

5. Procédé selon l'une des revendications précédentes, **caractérisé en ce que** l'échantillon est une cellule solaire.

**6.** Procédé selon la revendication 5, **caractérisé en ce que** la cellule solaire est à simple jonction.

**7.** Procédé selon l'une des revendications précédentes, **caractérisé en ce qu'**on identifie des zones de l'échantillon dans lesquelles ledit paramètre de résistance série $R_s^*(x,y)$ augmente, caractérisant des zones de l'échantillon dans lesquelles des défauts sont présents.

**8.** Procédé selon l'une des revendications précédentes, **caractérisé en ce qu'**on exploite au moins un deuxième paramètre parmi la constante $I_0^*(x,y)$ et le facteur d'idéalité $n(x,$ y) pour :

- comparer le modèle aux images acquises et identifier des zones de l'échantillon dans lesquelles ledit deuxième paramètre varie, et
- obtenir ainsi une deuxième cartographie de défauts dans l'échantillon.

**9.** Procédé selon la revendication 8, **caractérisé en ce que** la variation du deuxième paramètre par zones d'échantillon révèle des défauts différents de ceux révélés par la variation de la résistance série $R_s^*(x,y)$ .

**10.** Procédé selon la revendication 9, **caractérisé en ce que** le deuxième paramètre est fonction d'une énergie d'activation Ea de défauts dans le matériau, et **en ce qu'**une détermination de ladite énergie d'activation Ea caractérise un type de défaut présent dans le matériau.

**11.** Procédé selon l'une des revendications précédentes, **caractérisé en ce que** l'on tient compte en outre d'une résistance de fuite $R_{sh}^*(x,y)$ , **en ce que** le modèle s'exprime par une équation du type :

$$EL(V,x,y) = I_0^*(x,y) \cdot e^{\left(\frac{V - R_s^*(x,y) \cdot EL(V,x,y)}{n(x,y) \cdot kT}\right)} + \frac{V - R_s^*(x,y) \cdot EL(V,x,y)}{R_{sh}^*(x,y)}$$

Et **en ce qu'**on exploite en outre une variation de la résistance de fuite $R_{sh}^*(x,y)$ par zones d'image pour identifier des défauts dans le matériau.

**12.** Procédé selon l'une des revendications précédentes, **caractérisé en ce que** le matériau semi-conducteur est au moins partiellement cristallin et lesdits défauts comportent au moins des dislocations.

**13.** Installation pour la mise en oeuvre du procédé selon l'une des revendications précédentes, comportant au moins un support d'échantillon comportant deux bornes et conformé pour connecter l'échantillon aux deux bornes, un voltmètre pour appliquer une tension choisie entre les deux bornes, et une caméra pour acquérir les images successivement en fonction de la tension appliquée entre les deux bornes,
l'installation comportant en outre un circuit de traitement relié à la caméra pour acquérir des données d'intensité lumineuse par zones d'image acquises par la caméra, appliquer ledit modèle aux intensités lumineuses par zones d'images acquises et identifier des zones de l'échantillon dans lesquelles ledit paramètre (Rs*) varie, pour obtenir une cartographie des défauts dans l'échantillon.

**14.** Programme informatique comportant des instructions pour la mise en oeuvre du procédé selon l'une des revendications 1 à 12, lorsque lesdites instructions sont exécutées par un processeur d'un circuit de traitement.

**Patentansprüche**

**1.** Verfahren zur Bestimmung der räumlichen Verteilung von Defekten in einer Probe aus Halbleitermaterial, die an wenigstens zwei Anschlüssen elektrisch verbunden ist, wobei das Verfahren umfasst:

- Anlegen einer Spannung zwischen den beiden Anschlüssen,
- Erfassen eines Bildes eines von der Probe durch Elektrolumineszenz emittierten Lichts mit einer Kamera,

- Wiederholen der Bilderfassung, während die Spannung zwischen den beiden Anschlüssen variiert wird,
- Messen einer durch Elektrolumineszenz emittierten Lichtintensität in Bereichen der erfassten Bilder abhängig von der zwischen den beiden Anschlüssen angelegten Spannung,

wobei das Verfahren **dadurch gekennzeichnet ist, dass** es ferner Folgendes umfasst:

- Bestimmen eines Modells der Variation der durch Elektrolumineszenz emittierten Lichtintensität abhängig von der angelegten Spannung durch Gleichsetzung mit der Variation eines in der Probe erzeugten Stroms abhängig von der angelegten Spannung, wobei das Modell wenigstens einen Parameter (Rs*) verwendet, der ein Vorhandensein von Defekten in dem Material charakterisiert,
- Anwenden des Modells auf die Lichtintensitätsmessungen und Identifikation von Bereichen der Probe, in denen der Parameter (Rs*) variiert, und
- Ableiten eines Mappings von Defekten in der Probe aus den Variationen des Parameters (Rs*),

und **dadurch gekennzeichnet, dass** das Modell durch eine Gleichung des

$$EL(V, x, y) = I_0^*(x,y) \cdot \exp\left(\frac{V - R_s^*(x,y) \cdot EL(V,x,y)}{n(x,y) \cdot kT}\right)$$

folgenden Typs gegeben ist:
wobei:

*EL (V, x, y)* die durch Elektrolumineszenz emittierte Lichtintensität ist, die an einem Punkt mit den Koordinaten x und y eines Bildes gemessen wird, das mit einer zwischen den beiden Anschlüssen angelegten Spannung V aufgenommen wurde,
k die Boltzmann-Konstante ist,
T eine Umgebungstemperatur ist,
q die Ladung eines Elektrons ist,
$I_0^*(x,y)$ eine Konstante relativ zu *V* ist, die repräsentativ für einen Dunkelstrom der Probe an den Koordinaten x, y ist, *n(x, y)* ein Idealitätsfaktor ist, und
$R_s^*(x,y)$ eine Größe ist, die für einen parasitären Serienwiderstand im Material der Probe repräsentativ ist und dem genannten Parameter entspricht, der ein Vorhandensein von Defekten im Material charakterisiert.

2. Verfahren nach Anspruch 1, **dadurch gekennzeichnet, dass** die Defekte Verunreinigungen sind, die eine Trägerwanderung im Material während des Anlegens der Spannung stören, und dass der Parameter (Rs*) repräsentativ für einen parasitären Serienwiderstand in der Probe ist.

3. Verfahren nach Anspruch 2, **dadurch gekennzeichnet, dass** die Verunreinigungen wenigstens ein Metall umfassen.

4. Verfahren nach Anspruch 3, **dadurch gekennzeichnet, dass** das Metall Eisen ist.

5. Verfahren nach einem der vorhergehenden Ansprüche, **dadurch gekennzeichnet, dass** die Probe eine Solarzelle ist.

6. Verfahren nach Anspruch 5, **dadurch gekennzeichnet, dass** es sich bei der Solarzelle um eine Single-Junction-Zelle handelt.

7. Verfahren nach einem der vorhergehenden Ansprüche, **dadurch gekennzeichnet, dass** Bereiche der Probe identifiziert werden, in denen der genannte Serienwiderstandsparameter $R_s^*(x,y)$ zunimmt, wodurch Bereiche der Probe charakterisiert werden, in denen Defekte vorhanden sind.

8. Verfahren nach einem der vorhergehenden Ansprüche, **dadurch gekennzeichnet, dass** wenigstens ein zweiter Parameter aus der Konstante $I_0^*(x, y)$ und dem Idealitätsfaktor *n(x, y)* ausgewertet wird, um :

- das Modell mit den aufgenommenen Bildern zu vergleichen und Bereiche der Probe zu identifizieren, in denen der zweite Parameter variiert, und
- dadurch ein zweites Mapping von Defekten in der Probe zu erhalten.

9. Verfahren nach Anspruch 8, **dadurch gekennzeichnet, dass** die Variation des zweiten Parameters nach Probenbereichen Defekte aufdeckt, die sich von denen unterscheiden, die durch die Variation des Serienwiderstands $R^*s$ *(x, y)* aufgedeckt werden.

10. Verfahren nach Anspruch 9, **dadurch gekennzeichnet, dass** der zweite Parameter eine Funktion einer Aktivierungsenergie Ea von Defekten in dem Material ist und dass eine Bestimmung der Aktivierungsenergie Ea einen Typ eines in dem Material vorhandenen Defekts kennzeichnet.

11. Verfahren nach einem der vorhergehenden Ansprüche, **dadurch gekennzeichnet, dass** zusätzlich ein Leckage-widerstand $R^*_{sh}(x, y)$ berücksichtigt wird, dass das Modell durch eine Gleichung des folgenden Typs ausgedrückt wird:

$$EL(V, x, y) = I_0^*(x, y) \cdot e^{\left(\frac{V - R_s^*(x,y) \cdot EL(V,x,y)}{n(x,y) \cdot kT}\right)} + \frac{V - R_s^*(x, y) \cdot EL(V, x, y)}{R_{sh}^*(x, y)}$$

und dass zusätzlich eine Variation des Leckagewiderstands $R^*_{sh}(x, y)$ pro Bildbereich ausgewertet wird, um Defekte im Material zu identifizieren.

12. Verfahren nach einem der vorhergehenden Ansprüche, **dadurch gekennzeichnet, dass** das Halbleitermaterial wenigstens teilweise kristallin ist und die Defekte wenigstens Dislokationen umfassen.

13. Anlage zur Durchführung des Verfahrens nach einem der vorhergehenden Ansprüche, umfassend wenigstens einen Probenhalter, der zwei Anschlüsse aufweist und derart gestaltet ist, dass er die Probe mit den beiden Anschlüssen verbindet, einen Voltmeter zum Anlegen einer ausgewählten Spannung zwischen den beiden Anschlüssen, und eine Kamera, um die Bilder nacheinander abhängig von der zwischen den beiden Anschlüssen angelegten Spannung zu erfassen,
wobei die Anlage ferner eine mit der Kamera verbundene Verarbeitungsschaltung umfasst, um Lichtintensitätsdaten pro Bildbereich zu erfassen, die von der Kamera erfasst werden, um das Modell auf die Lichtintensitäten pro erfassten Bildbereichen anzuwenden und Bereiche der Probe zu identifizieren, in denen der Parameter (Rs*) variiert, um ein Mapping der Defekte in der Probe zu erhalten.

14. Computerprogramm, umfassend Anweisungen zur Durchführung des Verfahrens nach einem der Ansprüche 1 bis 12, wenn die Anweisungen von einem Prozessor einer Verarbeitungsschaltung ausgeführt werden.

**Claims**

1. A method for determining spatial distribution of defects in a semiconductor material sample and electrically connected to at least two terminals, the method including:

- applying a voltage between the two terminals,
- acquiring by a camera an image of light emitted by electroluminescence by the sample,
- repeating the image acquisition by varying the voltage between the two terminals,
- measuring a light intensity emitted by electroluminescence in zones of the images acquired as a function of said voltage applied between the two terminals,
the method being **characterised in that** it further includes:

- determining a model of variation in light intensity emitted by electroluminescence as a function of said voltage applied, by assimilation to the variation in a current generated in the sample as a function of the voltage applied, said model using at least one parameter (Rs*) characterising a presence of defects in the material,
- applying the model to the measurements of light intensity and identifying zones of the sample in which the parameter (Rs*) varies, and
- deducing a mapping of defects in the sample from the variations in the parameter (Rs*),

and **characterised in that** said model is given by an equation of the type:

$$EL(V, x, y) = I_0^*(x, y) \cdot \exp\left(\frac{V - R_s^*(x, y) \cdot EL(V, x, y)}{n(x, y) \cdot kT}\right)$$

where:

$EL(V, x, y)$ is the light intensity emitted by electroluminescence measured at a point of coordinates $x$ and $y$ of an image acquired with application of voltage V between the two terminals,

k is the Boltzmann's constant,

T is an ambient temperature,

q is the charge of one electron, $I_0^*(x, y)$

is a constant in relation to V, representative of a dark current of the sample at said coordinates $x, y,$

$n(x,$ y) is an ideality factor, and

$R_s^*(x, y)$ is a quantity representative of a parasitic series resistance in the material of the sample, and corresponds to said parameter characterising a presence of defects in the material.

2. The method according to claim 1, **characterised in that** the defects are impurities disturbing a migration of carriers in the material while applying the voltage, and **in that** the parameter (Rs*) is representative of a parasitic series resistance in the sample.

3. The method according to claim 2, **characterised in that** the impurities include at least one metal.

4. The method according to claim 3, **characterised in that** the metal is iron.

5. The method according to one of the preceding claims, **characterised in that** the sample is a solar cell.

6. The method according to claim 5, **characterised in that** the solar cell is with single junction.

7. The method according to one of the preceding claims, **characterised in that** zones of the sample in which said series resistance parameter $R_s^*(x, y)$ increases are identified, characterising zones of the sample in which defects are present.

8. The method according to one of the preceding claims, **characterised in that** at least one second parameter from the constant $I_0^*(x, y)$ and the ideality factor $n(x, y)$ is utilised to:

   - compare the model to images acquired and identify zones of the sample in which said second parameter varies, and
   - thus obtain a second mapping of defects in the sample.

9. The method according to claim 8, **characterised in that** the variation in second parameter per zones of sample reveals defects different from those revealed by the variation in the series resistance $R_s^*(x, y)$ .

10. The method according to claim 9, **characterised in that** the second parameter is a function of an activation energy Ea of defects in the material, and **in that** determining said activation energy Ea characterises a type of defect present in the material.

11. The method according to one of the preceding claims, **characterised in that** a leakage resistance $R_{sh}^*(x, y)$ is further taken into account, **in that** the model is expressed by an equation of the type:

$$EL(V, x, y) = I_0^*(x, y) \cdot e^{\left(\frac{V - R_s^*(x, y) \cdot EL(V, x, y)}{n(x, y) \cdot kT}\right)} + \frac{V - R_s^*(x, y) \cdot EL(V, x, y)}{R_{sh}^*(x, y)}$$

and **in that** a variation in the leakage resistance $R_{sh}^*(x, y)$ per zones of image is further utilised to identify defects in the material.

12. The method according to one of the preceding claims, **characterised in that** the semiconductor material is at least partially crystalline and said defects include at least dislocations.

13. A facility for implementing the method according to one of the preceding claims, including at least one sample holder including two terminals and shaped to connect the sample to the two terminals, a voltmeter to apply a selected voltage between the two terminals, and a camera to acquire the images successively as a function of the voltage applied between the two terminals,
the facility further including a processing circuit connected to the camera to acquire light intensity data per zones of image acquired by the camera, apply said model to the light intensities per zones of images acquired and identify zones of the sample in which said parameter (Rs*) varies, to obtain a mapping of defects in the sample.

14. A computer program including instructions for implementing the method according to one of claims 1 to 12, when said instructions are executed by a processor of a processing circuit.

## FIG. 1

CAM

Obj

PV

C1

C2

SUP

S

V

## FIG. 2

$V \nearrow$ — S1

$Im(V)$ — S2

$MOD$ — S3

$FIT (PARAM)$ — S4

$n, I_O^*, R_S^*, (R_{sh}^*)$ — S5

$CARTO$ — S6

$TYP ?$ — S7

(a)

## FIG. 3

EL

(b)

## FIG. 4

FIG. 5

FIG. 6

FIG. 7

FIG. 8

Intensité EL en fonction de Rs*, zone avec dislocations

(a)

Intensité EL en fonction de Rs*, zone sans dislocation

(b)

FIG. 9

EP 3 789 759 B1

**RÉFÉRENCES CITÉES DANS LA DESCRIPTION**

**Documents brevets cités dans la description**

- JP 2007318029 B
- US 20120113415 A
- EP 2343534 A